# EUROPÄISCHE PATENTSCHRIFT

(11) **EP 2 200 293 B1**
(45) Veröffentlichungstag und Bekanntmachung des Hinweises auf die Patenterteilung: **22.03.2017**
(21) Anmeldenummer: 09014942.8
(22) Anmeldetag: 02.12.2009
(51) Int. Cl.: H04N 5/64

(54) **Elektronisches Gerät mit einem Anzeigemodul**
Electronic device with a display module
Appareil électronique doté d'un module d'affichage

(30) Priorität: 17.12.2008 DE 102008063485
(43) Veröffentlichungstag der Anmeldung: 23.06.2010
(73) Patentinhaber: Wincor Nixdorf International GmbH, 33106 Paderborn (DE)
(72) Erfinder: Gagla, Mathias, 16761 Henningsdorf (DE); Kirschke, Uwe, 13505 Berlin (DE)
(74) Vertreter: Viering, Jentschura & Partner mbB Patent- und Rechtsanwälte

(56) Entgegenhaltungen:
- EP-A1- 1 457 982
- GB-A- 2 388 941
- US-A1- 2006 146 017
- US-A1- 2008 165 474
- US-B1- 7 404 515
- "DVD MULTIMEDIA STATION WITH TOUCH PANEL CONTROL", CLARION PRODUCT CATALOGUE, 1. Januar 2006 (2006-01-01), Seiten 1-3, XP055058096, Gefunden im Internet: URL:http://www.clarion.com/us/en/products/ 2006/multimedia/multimedia_source_units/VR X765VD/us-en-product-pf_1134643389344.html [gefunden am 2013-03-28]

## Beschreibung

Die Erfindung betrifft ein elektronisches Gerät mit einem Anzeigemodul, welches in einem das Anzeigemodul zumindest teilweise umschließenden Anzeigegehäuse angeordnet ist, mit einer Steuereinheit zur Ansteuerung des Anzeigemoduls und mit einem Bedienmodul, welches über Befestigungsmittel an dem Anzeigegehäuse entfernbar gehalten ist, welches über eine Schnittstelle mit der Steuereinheit verbindbar ist und welches eine Bedienoberfläche aufweist, an der ein Bedienelement und/oder ein Anzeigeelement und/oder ein Anschlusselement angeordnet sind.

Allgemein bekannt sind abnehmbare Bedienmodule für Geräte der Unterhaltungselektronik. So beschreibt die EP 1 285 819 B1 ein abnehmbares Bedienmodul für ein Kraftfahrzeugradio, dessen Radiogrundkörper beispielsweise im Bereich der Mittelkonsole fest im Fahrzeug verbaut ist. Das abnehmbare Bedienmodul wird zum Betrieb des Radios auf den Grundkörper aufgesteckt. In dem somit bewirkten Betriebszustand können das Radio bedient und die verschiedenen Radiofunktionen genutzt werden. Beispielsweise ist es über Bedienelemente, die an dem Bedienmodul angeordnet sind, möglich, die Lautstärken einzustellen oder Sender zu wählen. Überdies weist das Bedienmodul ein Anzeigeelement auf, über das beispielsweise der ausgewählte Sender angezeigt wird. Ferner ist bekannt, dass an dem Bedienmodul Anschlusselemente zur Anbindung externer Geräte, beispielsweise eines MP3-Players oder eines tragbaren CD-Players, vorgesehen sind. Beim Verlassen des Fahrzeugs wird das Bedienmodul vom Radiogrundkörper abgenommen. Typischerweise wird es von den Fahrzeuginsassen beim Verlassen des Fahrzeugs mitgeführt. Da allein das abnehmbare Bedienmodul eine Nutzung der verschiedenen Radiofunktionen ermöglicht, ist der Radiogrundkörper ohne das Bedienmodul nicht nutzbar. Das Vorsehen eines abnehmbaren Bedienmoduls dient folglich in erster Linie dazu, einem Diebstahl des Radiogerätes vorzubeugen. Ohne Bedienteil ist das Radiogerät für einen Dieb nahezu unverkäuflich. Nachteilig am Stand der Technik ist, dass das Radiogerät nur mit aufgesetztem Bedienmodul betrieben werden kann. In diesem Zustand stehen einer Bedienperson grundsätzlich alle Funktionen des elektronischen Geräts zur Verfügung. Bei abgenommenem Bedienmodul kann das elektronische Gerät nicht bedient werden. In der vorliegenden Form eignet sich das abnehmbare Bedienmodul demzufolge nicht, um einerseits den Betrieb des elektronischen Geräts zu ermöglichen, andererseits jedoch zu verhindern, dass das Gerät durch unbeabsichtigtes oder unfachmännisches Bedienen dejustiert oder verstellt wird.

Aufgabe der vorliegenden Erfindung ist es, ein abnehmbares Bedienmodul für ein elektronisches Gerät derart weiterzubilden, dass unzulässige und/oder unbeabsichtigte Einstellung von Funktionsparametern des elektronischen Geräts durch nichtautorisierte Bedienpersonen im regulären Betrieb vorgebeugt ist.

Zur Lösung dieser Aufgabe ist die Erfindung in Verbindung mit dem Oberbegriff des Patentanspruchs 1 dadurch gekennzeichnet, dass dass in einem Betriebszustand das Bedienmodul an dem Anzeigegehäuse des Anzeigemoduls und/oder in einem zu dem Anzeigegehäuse entfernt angeordneten Komponentengehäuse einer weiteren Funktionskomponente des elektronischen Geräts derart angeordnet ist, dass die Bedienoberfläche nicht zugänglich angeordnet ist, und dass zwischen dem Bedienmodul und der Steuereinheit eine kabelgebundene oder drahtlose Kommunikationsverbindung aufbaubar ist.

Der besondere Vorteil der Erfindung besteht darin, dass die Bedienoberfläche des abnehmbaren Bedienmoduls in dem Betriebszustand für die Bedienperson nicht einsehbar, mechanisch verdeckt oder anderweitig unzugänglich angeordnet sind, so dass eine Maßnahme gegen eine unbeabsichtigte Bedienung der in der Bedienoberfläche angeordneten Anschluss-und Bedienelemente getroffen wird. Kern der Erfindung ist es, die Bedienoberfläche des Bedienmoduls allein in einem Servicezustand für Personen zugänglich anzuordnen. Während des normalen Betriebs lassen sich die Bedien- und Anschlusselemente sowie die Anzeigeelemente zumindest nicht in einfacher Weise nutzen bzw. einsehen. Hierdurch ist ein Schutz gegen unbeabsichtigtes Verstellen des elektronischen Gerätes bewirkt. Durch das Vorsehen der Kommunikationsverbindung zwischen der Steuereinheit und dem abnehmbaren Bedienmodul, die wahlweise kabelgebunden oder drahtlos ausgebildet sein kann, lässt sich das Bedienmodul im montierten Zustand und im abgenommenen Zustand zur Bedienung des elektrischen Geräts verwenden.

Nach einer bevorzugten Ausführungsform der Erfindung ist die Schnittstelle zur Anbindung des Bedienmoduls an die Steuereinheit des Anzeigemoduls als eine mechanische Steckverbindung und/oder als eine Infrarotschnittstelle und/oder als eine Bluetooth-Schnittstelle und/oder als eine andere Funkschnittstelle ausgebildet. Das Vorsehen einer drahtlosen Kommunikationsverbindung ist hierbei insbesondere dann vorteilhaft, wenn eine unmittelbare räumliche Nähe zwischen der Steuereinheit und dem Bedienmodul nicht gegeben ist. Hier stellen die Infrarotschnittstelle, bei deren Verwendung eines ungestörten Sichtverbindung zwischen den Komponenten bedarf, ebenso wie die Bluetooth-Schnittstelle und andere Funkschnittstellen einen häufig genutzten, im Bereich der elektronischen Geräte kostengünstig zu realisierenden Kommunikationsstandard dar. Eine mechanische, kabelgebundene Kopplung von Steuereinheit und Bedienmodul ist besonders robust und mit wenig Aufwand insbesondere bei einer direkten räumlichen Nähe von Steuergerät und Bedienmodul vorteilhaft. Dabei kann auf einfache Weise Energie in das Bedienmodul eingebracht werden, die beispielsweise zum Betrieb einer Leuchtdiode genutzt wird.

Nach einer Weiterbildung der Erfindung kann das Anschlusselement als eine USB-Schnittstelle ausgebildet sein. Das Vorsehen einer USB-Schnittstelle im Bereich der Bedienoberfläche vereinfacht das Anbinden von externen, nur zeitweise angeschlossenen Datenträgern, beispielsweise USB-Sticks oder externe Festplatten. Mit Hilfe derartiger Speichermedien kann ein Servicetechniker notwendige Serviceupdates (Software) aufspielen oder Diagnosetools anschließen, so dass die Wartung besonders effizient innerhalb kurzer Zeit durchgeführt werden kann.

Nach einer Weiterbildung der Erfindung kann das Befestigungsmittel des Bedienmoduls als eine federnd ausgeführte Schnappverbindung ausgebildet sein, die eine entsprechend ausgestaltete Ausnehmung des Anzeigengehäuses oder der weiteren Funktionskomponente einsetzbar ist. Das Vorsehen einer federnd ausgeführten Schnappverbindung ist zum einen aus Fertigungsgesichtspunkten vorteilhaft, da eine derartige Schnappverbindung kostengünstig als Kunststoffspritzgussteil hergestellt werden kann. Zum anderen ist die Schnappverbindung in einfacher Weise zu lösen bzw. zu verriegeln, so dass das Abnehmen des Bedienmoduls schnell und zuverlässig möglich ist.

Nach einer Weiterbildung der Erfindung kann das Bedienmodul in dem Komponentengehäuse derart angeordnet sein, dass es in einem Servicezustand durch einen Wartungszugang zugänglich ist. Das Vorsehen des Bedienmoduls im Inneren des Komponentengehäuses ist insbesondere dann vorteilhaft, wenn das Anzeigemodul für eine Vielzahl ungeschulter Bedienpersonen zugänglich angeordnet ist. Dies ist beispielsweise bei Kontoauszugsdruckern, Kassensystemen, Selbstbedienungskiosken oder dergleichen der Fall. Das Bedienmodul kann in dem Komponentengehäuse eingeschlossen werden und ist damit nur autorisierten Personen zugänglich. Das Komponentengehäuse kann, muss jedoch nicht in unmittelbarer Nähe zu dem Anzeigemodul angeordnet sein. Als Wartungszugang kommen insbesondere Klappen, Türen oder im normalen Betriebszustand unzugängliche Gehäuseöffnungen, beispielsweise eine rückwärtige Aussparung am Gehäuse, in Betracht.

Nach einer Weiterbildung der Erfindung kann das Bedienmodul derart positionsveränderbar an dem Anzeigemodul gelagert sein, dass die Bedienoberfläche des Bedienmoduls in einem Servicezustand zugänglich ist. Durch die positionsveränderbare Lagerung und die hierdurch bewirkte Zugänglichkeit der Bedienoberfläche in einem Servicezustand kann auf das Anordnen des Bedienmoduls innerhalb des Komponentengehäuses verzichtet werden. Dies ist insbesondere dann vorteilhaft, wenn das elektronische Gerät im normalen Betriebszustand durch entsprechend geschultes und/oder autorisiertes Personal bedient wird. Das abnehmbare Bedienmodul kann im Betriebszustand wie auch im Servicezustand direkt an dem Anzeigemodul gelagert. Hierbei ist die Bedienoberfläche im Betriebszustand nicht zugänglich und im Servicezustand zugänglich. Für den Servicetechniker entfällt der Aufwand, das Bedienmodul innerhalb des Komponentengehäuses zu bedienen. Für den normalen Benutzer bietet sich der Vorteil, dass eine unbeabsichtigte Bedienung der Bedienelemente im Betriebszustand vermieden wird, eine Justage im Servicezustand jedoch durchgeführt werden kann.

Nach einer Weiterbildung der Erfindung kann das an dem Anzeigemodul gelagerte Bedienmodul durch Verdrehen desselben um eine Vertikalachse um 180° von dem Betriebszustand in den Servicezustand verbracht werden. Vorteilhaft kann ein bezüglich der Befestigungsmittel symmetrisch aufgebautes Bedienmodul hierbei besonders einfach von einem Betriebszustand in einen Servicezustand und zurück verbracht werden. Das Verdrehen um 180° wird hierbei vorzugsweise um eine Körperhauptachse erfolgen, so dass es auch von ungeübten Personen in einfacher Weise ausgeführt werden kann. Darüber hinaus können bei symmetrischer Ausführung gleiche Befestigungsmittel zur Festlegung des Bedienmoduls sowohl im Betriebszustand als auch im Servicezustand verwendet werden. Ebenso können die Ausnehmungen und/oder Befestigungspunkte am Anzeigegehäuse im Betriebs- und Servicezustand genutzt werden.

Nach einer Weiterbildung der Erfindung dient das Bedienmodul zur Einstellung des Kontrastes, der Helligkeit, der Farbgebung oder Anzeigeauflösung des Bedienmoduls. Vorteilhaft können hierdurch die Grundeinstellungen des Anzeigemoduls unmittelbar am Anzeigegerät selbst vorgenommen werden. Eine Einstellung dieser Parameter etwa mit Hilfe einer auf einem zentralen Rechner vorgesehenen Software kann entfallen.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1a: eine Monitoreinheit als elektronisches Gerät mit einem abnehmbaren Bedienmodul im Betriebszustand,
- Figur 1b: die Monitoreinheit gemäß Figur 1a in einem Servicezustand,
- Figur 2: eine Detaildarstellung des abnehmbaren Bedienmoduls gemäß Figuren 1a und 1b und
- Figur 3: ein elektronisches Gerät mit einer Monitoreinheit und einer weiteren Funktionskomponenten, in deren Komponentengehäuse das abnehmbar Bedienmodul gemäß Figur 2 angeordnet ist.

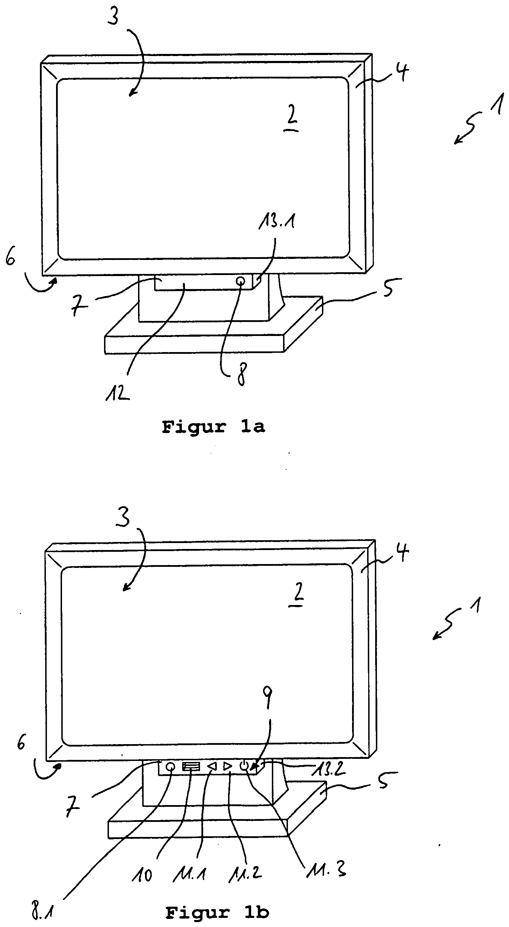

Als ein elektronisches Gerät 1 ist gemäß Figur 1a eine Monitoreinheit vorgesehen. Eine derartige Monitoreinheit 1 wird beispielsweise als Computerbildschirm oder als Anzeige in Kontoauszugsdruckern, Kassensystemen oder anderen Terminalgeräten eingesetzt. Die Monitoreinheit 1 weist ein Anzeigemodul 2, ein das Anzeigemodul 2 randseitig sowie auf einer einer Displayseite 3 des Anzeigemoduls 2 gegenüberliegenden Rückseite des Anzeigemoduls 2 umschließenden Anzeigegehäuses 4 sowie ein Standfußelement 5 auf. Die Displayseite 3 dient zur Darstellung des Bildschirminhalts und ist einem Benutzer zugewandt. An einer dem Standfußelement 5 zugewandten Unterseite 6 des Anzeigegehäuses 4 ist ein abnehmbares Bedienmodul 7 angeordnet, welches nach unten von dem Anzeigegehäuse 4 abragt.

Das abnehmbare Bedienmodul 7 ist als eine im Wesentlichen langgestreckte, quaderförmige Bedienleiste ausgebildet. In einem Betriebszustand gemäß der Figur 1a ist allein ein als ein Leuchtelement (Leuchtfläche) ausgebildetes Anzeigeelement 8 zur Anzeige des Energieversorgungsstatus für einen Benutzer sichtbar angeordnet.

Figur 1b zeigt die Monitoreinheit 1 in einem Servicezustand, welcher sich von dem Betriebszustand gemäß Figur 1a allein durch die Anordnung des abnehmbaren Bedienmoduls 7 an der Unterseite 6 des Anzeigegehäuses 4 unterscheidet. Das abnehmbare Bedienmodul 7 ist in dem Servicezustand derart ausgeführt, dass eine Bedienoberfläche 9 der Bedienperson, insbesondere einem Service- oder Wartungstechniker, zugewandt ist.

In der Bedienoberfläche 9 sind hierbei von links nach rechts gesehen ein Anzeigeelement 8.1, ein Anschlusselement 10 sowie drei Bedienelemente 11.1, 11.2, 11.3 angeordnet. Das Anzeigeelement 8.1 dient wie das Anzeigeelement 8 der Anzeige des Energieversorgungsstatus der Monitoreinheit 1, wobei der Energieversorgungsstatus der Monitoreinheit 1 gleichermaßen durch die beiden Anzeigeelemente 8, 8.1 visualisiert wird.

Das rechts neben dem Anzeigeelement 8.1 angeordnete Anschlusselement 10 ist als ein USB-Port ausgebildet. Alternativ können andere Schnittstellen vorgesehen sein, mittels derer ein externer Datenträger oder externes Funktionsgerät an die Monitoreinheit 1 angeschlossen werden können, beispielsweise eine Infrarotschnittstelle, eine serielle Datenleitung oder dergleichen. Der Anschluss externer Geräte kann über das Anschlusselement 10 sehr einfach und schnell erfolgen. Damit ist es möglich, eine neue Software aufzuspielen oder extern vorgehaltene Wartungs- und Diagnosewerkzeuge an die Monitoreinheit 1 anzuschließen.

Die drei Bedienelemente 11.1, 11.2, 11.3 sind wie das Anzeigeelement 8.1 und das Anschlusselement 10 allein im Servicezustand zugänglich. Die von links gesehen ersten beiden Bedienelemente 11.1, 11.2 dienen zur Einstellung von Betriebsparametern der Monitoreinheit 1, beispielsweise der Helligkeit, des Kontrastes, der Bildschirmauflösung und/oder der Farbgebung. Ebenso können sie zur Lautstärkeeinstellung eines in dem Anzeigegehäuse 4 verbauten, nicht dargestellten Lautsprechers dienen. Das rechte Bedienelement 11.3 dient als Ein-/Ausschalter der Monitoreinheit 1.

Über die Bedienelemente 11.1, 11.2 und 11.3, das Anschlusselement 10 und das Anzeigeelement 8.1 können alternativ zusätzliche und/oder andere Anzeige-, Bedien- und/oder Anschlusselemente in der Bedienoberfläche 9 des Bedienmoduls 7 angeordnet sein. Denkbar ist beispielsweise eine Kombination des Anzeigeelementes 8.1 mit dem als Ein-/Ausschalter ausgebildeten Bedienelement 11.3. Hierbei kann eine Leuchtdiode als Anzeigeelement 8.1 derart hinter dem Bedienelement 11.3 angeordnet sein, dass das von der Leuchtdiode abgestrahlte Licht das Bedienelement 11.3 und insbesondere das Ein-/Aussymbol hinterleuchtet. Ferner kann statt zwei separater Anzeigeelemente 8, 8.1 etwa durch Verwendung eines Lichtleiters ein Anzeigeelement 8 angeordnet sein, welches im Betriebszustand und im Servicezustand einsehbar ist. Der Lichtleiter weist hierbei zwei Lichtauskoppelflächen auf, die beispielsweise der ersten Außenseite (Bedienoberfläche 9) und der dieser gegenüberliegenden zweiten Außenseite (12) des Bedienmoduls 7 zugeordnet sind. Über eine Leuchtdiode wird Licht in den Lichtleiter eingekoppelt, zu den beiden Lichtauskoppelflächen geleitet und dort ausgekoppelt. Die Leuchtdiode kann hierbei in dem Bedienmodul 7 angeordnet sein. Dies ist insbesondere bei einer - bezogen auf die Längsrichtung L des Bedienmoduls - außermittigen Anordnung des Anzeigeelements 8 in dem Bedienmodul 7 vorteilhaft. Alternativ kann die Leuchtdiode an oder in dem Anzeigegehäuse 4 angeordnet sein, was insbesondere bei einer mittigen Anordnung des Anzeigeelements 8 in dem Bedienmodul 7 vorteilhaft ist. Ebenso können bei einer außermittigen Anordnung des Anzeigelements 8 im Bedienmodul 7 eine Mehrzahl von Leuchtdioden, beispielsweise zwei, an oder in dem Anzeigegehäuse 4 angeordnet sein. Eine erste Leuchtdiode dient dann zur Einkopplung des Lichts in den Lichtleiter in dem Betriebszustand und eine zweite Leuchtdiode zur Einkopplung des Lichts in den Lichtleiter in dem Servicezustand.

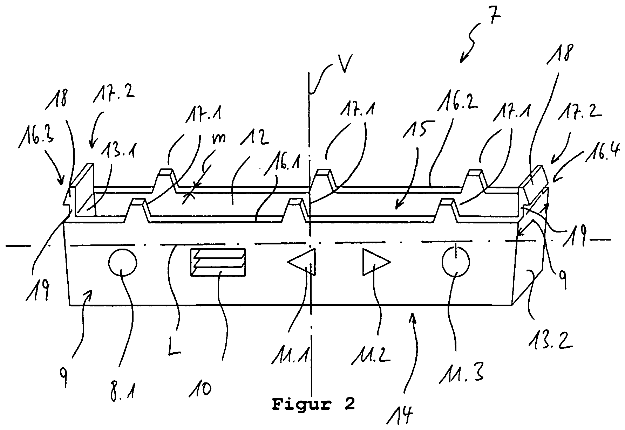

Das abnehmbare Bedienmodul 7 ist gemäß Figur 2 als eine langgestreckte, im Wesentlichen quaderförmige Bedienleiste ausgebildet. Die Bedienoberfläche 9 bildet hierbei eine sich in eine Längsrichtung L des abnehmbaren Bedienmoduls 7 erstreckende erste Außenseite (Bedienoberfläche 9) desselben. Ihr gegenüber ist eine zweite Außenseite 12 angeordnet, die gleichzeitig die dem Benutzer in dem Betriebszustand gemäß Figur 1a zugewandte Anzeigeelement 8 umfassende Außenwandung des abnehmbaren Bedienmoduls 7 bildet. Die die Bedienoberfläche 9 umfassende erste Außenseite (Bedienoberfläche 9) und die zweite Außenseite 12 des abnehmbaren Bedienmoduls 7 sind über zwei Stirnseiten 13.1, 13.2 sowie eine im angebauten Zustand des abnehmbaren Bedienmoduls 7 dem Standfußelement 5 zugewandte dritte Außenseite 14 verbunden.

Auf der der dritten Außenseite 14 gegenüberliegenden Seite weist das abnehmbare Bedienmodul 7 eine Aussparung 15 auf. Hierbei ist das Bedienmodul 7 als dünnwandiger Hohlkörper ausgeführt, so dass die Aussparung 15 von der ersten Außenseite (Bedienoberfläche 9), der zweiten Außenseite 12 und den beiden Stirnseiten 13.1, 13.2 zugeordneten Wandabschnitte 16.1, 16.2, 16.3 und 16.4 begrenzt ist. Die Außen-und Stirnflächen 9, 12, 13.1, 13.2, 14 sind im Vergleich zur Querabmessung q des Bedienmoduls 7 dünn und weisen eine Wandstärke m auf.

Im Bereich der einander gegenüberliegenden Wandabschnitte 16.1, 16.2, die der ersten Außenseite (Bedienoberfläche 9) und der zweiten Außenseite 12 zugeordnet sind, sind in Längsrichtung L verteilt eine Mehrzahl von längsseitigen Befestigungsmitteln 17.1 angeordnet. Zudem sind stirnseitige Befestigungsmittel 17.2 im Bereich der den Stirnseiten 13.1, 13.2 zugeordneten Wandabschnitte 16.3, 16.4 zugeordnet. Die in Längsrichtung L angeordneten Befestigungsmittel 17.1 sind hierbei trapezförmig ausgebildet. Sie weisen die gleiche Wandstärke m auf wie die sonstigen Außenseiten 9, 12, 14 und die Stirnseiten 13.1, 13.2. Die längsseitigen Befestigungsmittel 17.1 greifen im ausgebauten Zustand in korrespondierend angeordnete und/oder geformte Aussparungen des Anzeigegehäuses 4 ein. Das stirnseitige Befestigungsmittel 17.2 weist in einem dem ihm zugeordneten Wandabschnitt 16.3, 16.4 abgewandten Endabschnitt eine Befestigungsnase 18 auf, die in Längsrichtung L nach außen von dem abnehmbaren Bedienmodul 7 abragt. Die Befestigungsnase 18 greift im angebauten Zustand (Bedienzustand und Servicezustand) in entsprechend geformte, nicht dargestellte Ausnehmungen des Anzeigegehäuses 14 ein. Das stirnseitige Befestigungsmittel 17.2 bildet hierbei eine Schnappverbindung. Diese Schnappverbindung ist federnd ausgeführt, indem ein als ein Stegabschnitt 19 ausgebildeter, dem stirnseitigen Wandabschnitt 16.3, 16.4 zugeordneter zweiter Endabschnitt des stirnseitigen Befestigungsmittels eine geringe Wandstärke, vorzugsweise die Wandstärke m, aufweist.

Wenn das Bedienmodul 7 am Anzeigegehäuse 4 gelagert ist, liegt die Ausnehmung 15 des Bedienmoduls 7 derart an einem Teil des Anzeigegehäuses 4 an, dass die Ausnehmung 15 vollständig abgedeckt ist. Die längsseitigen Befestigungsmittel 17.1 dienen hierbei der Schaffung einer definierten Lage des abnehmbaren Bedienmoduls 7 in Bezug auf das Anzeigegehäuse 4. Darüber hinaus dienen die stirnseitigen Befestigungsmittel 17.2 der lösbaren Festlegung des abnehmbaren Bedienmoduls 7 am Anzeigegehäuse 4.

Zur Verbringung des Bedienmoduls von einem Betriebszustand gemäß Figur 1a in einen Servicezustand gemäß Figur 1b wird das abnehmbare Bedienmodul 7 vom Anzeigegehäuse 4 des Anzeigemoduls 2 abgenommen, um eine vertikale Körperachse V um 180° gedreht und zurück an das Anzeigegehäuse 4 montiert. Auf diese Weise kann eine Positionsveränderung ohne weitere technische Hilfsmittel innerhalb kurzer Zeit bewirkt werden.

Statt einer vertikalen 180°-Drehung kann die Positionsveränderung, mit der das Bedienmodul 7 von dem Betriebszustand in den Servicezustand und zurück verbringbar ist, auf andere Art bewirkt werden. So ist beispielsweise ein Klappen um die Längsachse L des Bedienmoduls 7 denkbar, beispielsweise um 90° um die Längsrichtung L. Ebenso ist denkbar, dass das Bedienmodul 7 im Betriebszustand und im Servicezustand an unterschiedlichen Stellen des Anzeigegehäuses 4 gehalten ist. Die Bedienoberfläche 9 kann hierbei an einer anderen als der zweiten Außenseite 12 gegenüberliegenden Seite des Bedienmoduls 7 vorgesehen sein.

Durch die geometrische Form des Standfußelementes 5 und die Anordnung des abnehmbaren Bedienmoduls 7 am Anzeigegehäuse 4 wird sichergestellt, dass die Bedienoberfläche 9 in dem Betriebszustand unzugänglich angeordnet. Unzugänglich bedeutet in diesem Fall, dass die Bedienoberfläche 9 von einer vor der Monitoreinheit 1 befindlichen Person nicht einsehbar und/oder nicht mechanisch bedienbar ist. Um sicherzustellen, dass die Bedienoberfläche 9 im Betriebszustand nicht mechanisch bedienbar ist, kann der Abstand zwischen dem abnehmbaren Bedienmodul 7 und dem Standfußelement 5 beispielsweise derart gering bemessen sein, dass ein menschlicher Finger nicht in einen zwischen dem Bedienmodul 7 und dem Standfußelement 5 gebildeten Spalt hineingreift kann.

In dem als dünnwandige Bedienleiste ausgebildeten Bedienmodul 7 können neben den Bedien-, Anzeige- und Anschlusselementen 8, 8.1, 10, 11.1, 11.2, 11.3 weitere, in Figur 2 nicht dargestellte Komponenten angeordnet sein. Dies sind insbesondere die zur Datenkommunikation erforderlichen Bauelemente, beispielsweise ein mechanischer Steckverbinder oder eine Sende-/Empfangseinheit zur Infrarot-, Bluetooth-oder Funkdatenübertragung. Korrespondierend zu den Kommunikationskomponenten in dem abnehmbaren Bedienmodul 7 sind in der Monitoreinheit 1 entsprechende Kommunikationsmittel vorgesehen, über die das Bedienmodul 7 mit einer nicht dargestellten, innerhalb des Anzeigegehäuses 4 und/oder dem Standfußelement 5 verbauten Steuereinheit verbunden ist.

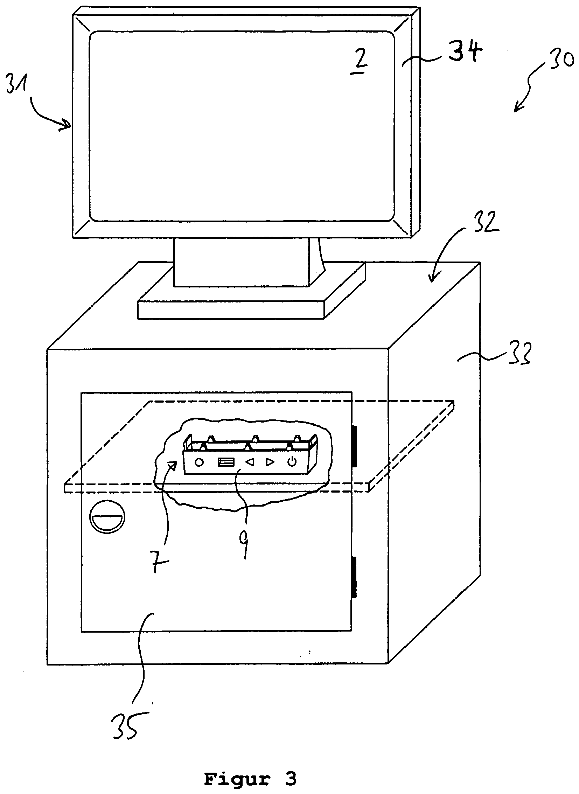

Nach einer alternativen Ausführungsform der Erfindung gemäß Figur 3 besteht ein elektronisches Gerät 30 aus einer Monitoreinheit 31 sowie aus einer weiteren Funktionskomponente 32, die in einem Komponentengehäuse 33 verbaut ist. Bei dem elektronischen Gerät 30 handelt es sich beispielsweise um einen Kontoauszugsdrucker, einen Geldautomaten, ein Registrierkassensystem oder ein Selbstbedienungsterminal im Betriebszustand. Das abnehmbare Bedienmodul 7 ist, anders als bei dem vorherigen Ausführungsbeispiel, nicht an einem das Anzeigemodul 2 umgebenden Anzeigegehäuse 34 der Monitoreinheit 31, sondern im Inneren des Komponentengehäuses 33 angeordnet. Die datentechnische Kopplung von Bedienmodul 7 und einem nicht dargestellten Steuergerät der Monitoreinheit 31 kann hierbei in bekannter Weise drahtlos oder kabelgebunden erfolgen.

Gleiche Bauteile und Bauteilfünktionen der beschriebenen Ausführungsbeispiele sind mit gleichen Bezugszeichen versehen.

Innerhalb des Komponentengehäuses 33 kann das Bedienmodul 7 ortsfest angeordnet sein. Darüber hinaus besteht die Möglichkeit, das Bedienmodul 7 innerhalb des Komponentengehäuses 33 zu befestigen, beispielsweise unter Nutzung der Befestigungsmittel 17.1, 17.2. Bei einer ortsfesten oder befestigten Anordnung des Bedienmoduls 7 in dem Komponentengehäuse 33 wird sichergestellt, dass das abnehmbare Bedienmodul 7 immer an einer festen Stelle vorgesehen ist. Dies ist insbesondere vorteilhaft, wenn unterschiedliche Wartungstechniker mit Servicearbeiten betraut werden. Diese müssen dann nicht lange nach dem Bedienmodul 7 suchen. Darüber hinaus ist eine ortsfeste und/oder befestigte Anordnung bei einer kabelgebundenen Kommunikationsverbindung zur Steuereinheit 20 der Monitoreinheit 31 vorteilhaft.

In einem normalen Betriebszustand des elektronischen Geräts 30 ist das abnehmbare Bedienmodul 7 für die vor der Monitoreinheit 31 befindliche Bedienperson unzugänglich. Im konkreten Ausführungsbeispiel wird sogar auf die sichtbare Anordnung des Anzeigeelementes 8 verzichtet. Das Bedienmodul 7 ist im Inneren des Komponentengehäuses 33 hinter einer Tür 35 angeordnet. Zu Wartungszwecken öffnet ein Wartungstechniker die Tür 35 und verbringt das elektronische Gerät 30 somit in einen Servicezugang, in dem das Bedienmodul 7 für den Servicetechniker durch die geöffnete Tür 35 im Inneren des Komponentengehäuses 33 zugänglich angeordnet ist. Auch hier besteht die Möglichkeit, die Bedienelemente 11.1, 11.2, 11.3 zur Einstellung der Funktionsparameter der Monitoreinheit 31 zu verwenden. Ebenso besteht die Möglichkeit, externe Datenträger über das Anschlusselement 10 anzubinden.

Nach dem Abschluss der Wartungsarbeiten verschließt der Servicetechniker die Tür 35 und verbringt das elektronische Gerät 30 somit aus dem Servicezustand in den Betriebszustand. Hierbei ist das Bedienmodul 7 durch das Vorsehen einer verschlossenen Tür 35 für den Benutzer im Betriebszustand unzugänglich angeordnet.

Alternativ kann statt einer Tür eine Klappe, eine im Betriebszustand verdeckt angeordnete Öffnung oder dergleichen als Zugang zu dem in dem Komponentengehäuse 33 angeordneten Bedienmodul 7 dienen.

**Bezugszeichenliste**

| | | | |
|---|---|---|---|
| 1 | elektronisches Gerät | 33 | Komponentengehäuse |
| 2 | Anzeigemodul | 34 | Anzeigegehäuse |
| 3 | Displayseite | 35 | Tür |
| 4 | Anzeigegehäuse | | |
| 5 | Standfußelement | V | Vertikale Körperachse |
| 6 | Unterseite | L | Längsrichtung |
| 7 | abnehmbares Bedienmodul | m | Wandstärke |
| 8, 8.1 | Anzeigeelement | q | Querabmessung |
| 9 | Bedienoberfläche (erste Außenseite) | | |
| 10 | Anschlusselement | | |
| 11.1, 11.2, 11.3 | Bedienelemente | | |
| 12 | zweite Außenseite | | |
| 13.1, 13.2 | Stirnseiten | | |
| 14 | dritte Außenseite | | |
| 15 | Aussparung | | |
| 16.1 - 16.4 | Wandabschnitte | | |
| 17.1, 17.2 | Befestigungsmittel | | |
| 18 | Befestigungsnase | | |
| 19 | Stegabschnitt | | |
| | | | |
| 30 | elektronisches Gerät | | |
| 31 | Monitoreinheit | | |
| 32 | weitere Funktionskomponente | | |

## Patentansprüche

1. Elektronisches Gerät mit einem Anzeigemodul, welches in einem das Anzeigemodul zumindest teilweise umschließenden Anzeigegehäuse angeordnet ist, mit einer Steuereinheit zur Ansteuerung des Anzeigemoduls und mit einem Bedienmodul,
- welches über Befestigungsmittel an dem Anzeigegehäuse entfernbar gehalten ist,
- welches über eine Schnittstelle mit der Steuereinheit verbindbar ist und
- welches eine Bedienoberfläche aufweist, an der ein Bedienelement und/oder ein Anzeigeelement und/oder ein Anschlusselement angeordnet sind,
**dadurch gekennzeichnet,**
- **dass** in einem Betriebszustand das Bedienmodul (7) an dem Anzeigegehäuse (4, 34) des Anzeigemoduls (2) derart angeordnet ist, dass die Bedienoberfläche (9) nicht zugänglich angeordnet ist, und
- **dass** zwischen dem Bedienmodul (7) und der Steuereinheit eine kabelgebundene oder drahtlose Kommunikationsverbindung aufbaubar ist.

2. Elektronisches Gerät nach Anspruch 1, **dadurch gekennzeichnet, dass** die Schnittstelle zur Anbindung des Bedienmoduls (7) an die Steuereinheit als eine mechanische Steckverbindung und/oder als eine Infrarotschnittstelle und/oder als eine Bluetooth-Schnittstelle und/oder als eine andere Funkschnittstelle ausgebildet ist.

3. Elektronisches Gerät nach Anspruch 1 oder 2, **dadurch gekennzeichnet, dass** das Anschlusselement (10) als eine USB-Schnittstelle ausgebildet ist.

4. Elektronisches Gerät nach einem der Ansprüche 1 bis 3, **dadurch gekennzeichnet, dass** das Anzeigeelement (8, 8.1) als ein Leuchtelement zur Darstellung eines Bedienparameters des elektronischen Gerätes (1, 30) ausgebildet ist, das einen Lichtleiter umfasst, der das von einer Leuchtdiode erzeugte Licht an gegenüberliegende Außenseiten (9, 12) umlenkt.

5. Elektronisches Gerät nach einem der Ansprüche 1 bis 4, **dadurch gekennzeichnet, dass** das Bedienmodul (7) als eine langgestreckte Bedienleiste ausgebildet ist.

6. Elektronisches Gerät nach einem der Ansprüche 1 bis 5, **dadurch gekennzeichnet, dass** wenigstens ein Teil der Befestigungsmittel (17.1, 17.2) des Bedienmoduls (7) als eine federnd ausgeführte Schnappverbindung ausgebildet ist, die in eine entsprechend gestaltete Ausnehmung des Anzeigegehäuses (4) oder der weiteren Funktionskomponente (32) einsetzbar ist.

7. Elektronisches Gerät nach einem der Ansprüche 1 bis 6, **dadurch gekennzeichnet, dass** das Bedienmodul (7) positionsveränderbar an dem Anzeigemodul (2) gelagert ist derart, dass die Bedienoberfläche (9) des Bedienmoduls (7) in einem Servicezustand zugänglich angeordnet ist.

8. Elektronisches Gerät nach Anspruch 7, **dadurch gekennzeichnet, dass** das Bedienmodul (7) zur Positionsveränderung schwenkbar und/oder verdrehbar und/oder abnehmbar an dem Anzeigegehäuse (4, 34) gelagert ist.

9. Elektronisches Gerät nach Anspruch 7 oder 8, **dadurch gekennzeichnet, dass** das Bedienmodul (7) durch Verdrehen desselben um eine Vertikalachse (V) um 180° von dem Betriebszustand in den Servicezustand verbringbar ist und vice versa.

10. Elektronisches Gerät nach einem der Ansprüche 7 bis 9, **dadurch gekennzeichnet, dass** das Anzeigeelement (8, 8.1) in dem Betriebszustand und in dem Servicezustand zugänglich angeordnet ist und/oder dass in dem Betriebszustand ein weiteres Anzeigeelement (8.1) zugänglich angeordnet ist.

11. Verwendung eines Bedienmoduls (7) eines elektronischen Gerätes (1, 30) nach einem der Ansprüche 1 bis 10 zur Einstellung von einem Kontrast und/oder einer Helligkeit und/oder einer Farbgebung und/oder Anzeigeauflösung des Anzeigemoduls (2).

## Claims

1. Electronic device comprising a display module which is arranged in a display housing which at least partially surrounds the display module, comprising a control unit for actuating the display module, and comprising an operator control module,
- which is removably held on the display housing by means of fastening means,
- which can be connected to the control unit by means of an interface, and
- which has an operator control surface on which an operator control element and/or a display element and/or a connection element are/is arranged,
**characterized**
- **in that**, in an operating state, the operator control module (7) is arranged on the display housing (4, 34) of the display module (2) in such a way that the operator control surface (9) is arranged in a non-accessible manner, and
- **in that** a cable-bound or wireless communication connection can be built up between the operator control module (7) and the control unit.

2. Electronic device according to Claim 1, **characterized in that** the interface for connecting the operator control module (7) to the control unit is designed as a mechanical plug connection and/or as an infrared interface and/or as a Bluetooth interface and/or as another radio interface.

3. Electronic device according to Claim 1 or 2, **characterized in that** the connection element (10) is designed as a USB interface.

4. Electronic device according to one of Claims 1 to 3, **characterized in that** the display element (8, 8.1) is designed as a lighting element for displaying an operator control parameter of the electronic device (1, 30), which lighting element comprises a light guide which deflects the light, which is generated by a light-emitting diode, to opposite outer sides (9, 12).

5. Electronic device according to one of Claims 1 to 4, **characterized in that** the operator control module (7) is designed as an elongate operator control strip.

6. Electronic device according to one of Claims 1 to 5, **characterized in that** at least some of the fastening means (17.1, 17.2) of the operator control module (7) are designed as a snap-action connection of resilient design which can be inserted into a correspondingly designed recess in the display housing (4) or the further functional component (32).

7. Electronic device according to one of Claims 1 to 6, **characterized in that** the operator control module (7) is mounted on the display module (2) such that it can change position in such a way that the operator control surface (9) of the operator control module (7) is arranged in an accessible manner in a service state.

8. Electronic device according to Claim 7, **characterized in that** the operator control module (7) is mounted on the display housing (4, 34) in a pivotable manner and/or a rotatable manner and/or a movable manner in order to change position.

9. Electronic device according to Claim 7 or 8, **characterized in that** the operator control module (7) can be moved from the operating state to the service state and vice versa by rotating the said operator control module through 180° about a vertical axis (V).

10. Electronic device according to one of Claims 7 to 9, **characterized in that** the display element (8, 8.1) is arranged in an accessible manner in the operating state and in the service state, and/or **in that** a further display element (8.1) is arranged in an accessible manner in the operating state.

11. Use of an operator control module (7) of an electronic device (1, 30) according to one of Claims 1 to 10 for setting a contrast and/or a brightness and/or a colour and/or a display resolution of the display module (2).

## Revendications

1. Appareil électronique comprenant un module d'affichage, lequel est disposé dans un boîtier d'affichage qui entoure au moins partiellement le module d'affichage, comprenant une unité de commande destinée à commander le module d'affichage et comprenant un module de contrôle,
- lequel est maintenu de manière amovible au boîtier d'affichage par des moyens de fixation,
- lequel peut être relié à l'unité de commande par le biais d'une interface et
- lequel possède une interface de contrôle sur laquelle sont disposés un élément de contrôle et/ou un élément indicateur et/ou un élément de raccordement,
**caractérisé en ce**
- **que** dans un état de fonctionnement, le module de contrôle (7) est disposé sur le boîtier d'affichage (4, 34) du module d'affichage (2) de telle sorte que l'interface de contrôle (9) n'est pas disposée de manière accessible, et
- **qu'**une liaison de communication filaire ou sans fil peut être établie entre le module de contrôle (7) et l'unité de commande.

2. Appareil électronique selon la revendication 1, **caractérisé en ce que** l'interface destinée au rattachement du module de contrôle (7) à l'unité de commande est réalisée sous la forme d'une connexion enfichable mécanique et/ou d'une interface à infrarouge et/ou d'une interface Bluetooth et/ou d'une autre interface radioélectrique.

3. Appareil électronique selon la revendication 1 ou 2, **caractérisé en ce que** l'élément de raccordement (10) est réalisé sous la forme d'une interface USB.

4. Appareil électronique selon l'une des revendications 1 à 3, **caractérisé en ce que** l'élément indicateur (8, 8.1) est réalisé sous la forme d'un élément luminescent destiné à représente un paramètre de fonctionnement de l'appareil électronique (1, 30), lequel comporte une fibre optique qui dévie la lumière produite par une diode électroluminescente vers des côtés extérieurs (9, 12) opposés.

5. Appareil électronique selon l'une des revendications 1 à 4, **caractérisé en ce que** le module de contrôle (7) est réalisé sous la forme d'une barre de contrôle étendue en longueur.

6. Appareil électronique selon l'une des revendications 1 à 5, **caractérisé en ce qu'**au moins une partie des moyens de fixation (17.1, 17.2) du module de contrôle (7) est réalisée sous la forme d'une liaison à encliquetage à effet ressort qui peut être introduite dans un logement configuré en conséquence du boîtier d'affichage (4) ou d'un composant fonctionnel supplémentaire (32).

7. Appareil électronique selon l'une des revendications 1 à 6, **caractérisé en ce que** le module de contrôle (7) est monté sur le module d'affichage (2) avec possibilité de changement de position de telle sorte que l'interface de contrôle (9) du module de contrôle (7) est disposée de manière accessible dans un état de service.

8. Appareil électronique selon la revendication 7, **caractérisé en ce que** le module de contrôle (7) est monté pivotant et/ou rotatif et/ou amovible sur le boîtier d'affichage (4, 34) en vue du changement de position.

9. Appareil électronique selon la revendication 7 ou 8, **caractérisé en ce que** le module de contrôle (7) peut être amené de l'état de fonctionnement dans l'état de service et inversement en tournant celui-ci de 180° autour d'un axe vertical (V).

10. Appareil électronique selon l'une des revendications 7 à 9, **caractérisé en ce que** l'élément indicateur (8, 8.1) est disposé de manière accessible dans l'état de fonctionnement et dans l'état de service et/ou **en ce qu'**un élément indicateur supplémentaire (8.1) est disposé de manière accessible dans l'état de fonctionnement.

11. Utilisation d'un module de contrôle (7) d'un appareil électronique (1, 30) selon l'une des revendications 1 à 10 pour le réglage d'un contraste et/ou d'une luminosité et/ou d'une coloration et/ou d'une résolution d'affichage du module d'affichage (2).
